# EUROPÄISCHE PATENTSCHRIFT

(11) **EP 0 408 833 B1**
(45) Veröffentlichungstag und Bekanntmachung des Hinweises auf die Patenterteilung: **27.10.1993**
(21) Anmeldenummer: 90105484.1
(22) Anmeldetag: 23.03.1990
(51) Int. Cl.: F16B 37/08

(54) **Schraubglied mit Muttergewinde**
Screw fitting element having a female thread
Elément de vissage ayant un filet femelle

(30) Priorität: 20.07.1989 DE 8908823 U
(43) Veröffentlichungstag der Anmeldung: 23.01.1991
(73) Patentinhaber: Dörr, Wolfgang, D-70839 Gerlingen (DE)
(72) Erfinder: Dörr, Wolfgang, D-70839 Gerlingen (DE)
(74) Vertreter: Schmid, Berthold, Dipl.-Ing.

(56) Entgegenhaltungen:
- WO-A-86/01266
- CH-A- 353 580
- DE-A- 2 553 255
- DE-B- 1 159 075
- US-A- 4 478 546

## Beschreibung

Die Erfindung bezieht sich auf ein Schraubglied mit in Längsrichtung zweigeteiltem Muttergewinde gemäß dem Oberbegriff des Anspruchs 1. Ein solches Schraubglied ist aus der DE-A-25 53 255 bekannt. Das Schraubglied hat die Funktion eines Befestigungs- oder Halteelements, wobei das Muttergewinde auf einen Gewindebolzen aufgeschraubt werden kann. Aus verschiedensten Gründen kann es sich ergeben, daß das Bolzengewinde verhältnismäßig lang ist und das Schraubglied eine Vielzahl von Umdrehungen machen muß, bis es schließlich in eine das Festhalten, Festspannen, Arretieren und dgl. bewirkende Arbeitsposition kommt.

Das Schraubglied, das aus der DE-A-25 53 255 bekannt ist, weist einen axial aufgesetzten oder aufgeschrauben ringförmigen Umfassungsteil auf, der einen ringförmigen Fortsatz des Schraubglieds klammerartig oder spannend umschließt. Dadurch ist das Lösen des ringförmigen Umfassungsteils vom Schraubglied durch die Hand erschwert.

Ein weiteres Schraubglied mit in Längsrichtung zweigeteiltem Muttergewinde ist jeweils in der CH-A-353 580 und der DE-B-1 159 075 beschrieben, wobei es sich um ein Sechskantschraubglied handelt. Um die beiden Teile so zusammenzupressen, daß das Muttergewinde auf einem Bolzengewinde hält, wird vorgeschlagen, entweder das Schraubglied mit einer leicht schwach konischen Außenbegrenzung zu versehen und es in eine entsprechend geformte Vertiefung eines Konstruktionsteils einzupassen, in welche sich das Schraubglied nach dem Anziehen des Muttergewindes einpreßt oder um die Hälten des Schraubglieds herum einen Profilring zu legen, der die Hälten des Schraubglieds nach dem Anziehen des Muttergewindes zusammenpreßt.

Die Aufgabe der Erfindung besteht darin, ein gattungsgemäßes Schraubglied mit in Längsrichtung zweigeteilter Muttergewinde so auszubilden, daß es rasch und sicher in einer wirksamen Position von Hand verspannt und aus dem zusammengespannten Zustand auch leicht von Hand wieder gelöst werden kann.

Zur Lösung dieser Aufgabe wird erfindungsgemäß vorgeschlagen, daß das Schraubglied mit dem in Längsrichtung zweigeteilten Muttergewinde gemäß dem kennzeichnenden Teil des Anspruchs 1 ausgebildet ist. Durch die Aufteilung des Muttergewindes in zwei Teile, insbesondere zwei Hälften, kann man diese so weit auseinanderschwenken, daß sich das Schraubglied, ohne mit dem Bolzengewinde verschraubt werden zu müssen, entlang dem Bolzengewinde verschieben läßt. Erst kurz vor Erreichung der Arbeitsstellung bringt man die beiden Teile des Muttergewindes in Eingriff mit dem Bolzengewinde und sichert diese Relativlage der beiden Gewindeteile mit Hilfe der Klammer. Mit wenigen Umdrehungen kann dieses Schraubglied dann anschließend in die Arbeitsposition gebracht werden, in welcher es die Aufgabe einer üblichen Mutter übernimmt. Die Klammer ist so ausgebildet, daß sie sich einerseits rasch anbringen läßt und sie andererseits den auftretenden Belastungen sicher gewachsen ist. Außerdem soll ein unbeabsichtigtes Lösen unterbunden, nach Möglichkeit aber ein leichtes Abnehmen gewährleistet sein. Die Achse des Schwenkgelenks, verläuft parallel zur geometrischen Gewindeachse.

In der Arbeitsstellung müssen die beiden Gewindehälften nicht unmittelbar aneinander anschließen, vielmehr kann zwischen den einander zugeordneten Umfangsenden der beiden Gewindeteile jeweils ein Spaltraum vorhanden sein. Bei dem federelastisch aufspreizbaren Bügel ist in der vorstehend angedeuteten Weise keine körperlich ausgeprägte Schwenkachse vorhanden, vielmehr ermöglicht der entsprechend dimensionierte Bügelrücken ein zumindest begrenztes Auseinanderschwenken der beiden Bügelschenkel, wodurch sich dann auch die beiden Gewindeteile etwas voneinander entfernen. In diesem aufgespreizten Zustand kann das Schraubglied leicht entlang dem Bolzengewinde verschoben werden. Sobald die das Aufspreizen bewirkende Kraft entfällt, federn die Bügelschenkel wieder gegeneinander und dadurch kommen dann die beiden Teile des Muttergewindes mit dem Bolzengewinde in Eingriff. Mit Hilfe der Klammer kann man, soweit erforderlich, das Bolzengewinde noch verengen. Zumindest erreicht man aber durch die Klammer eine Absicherung der für das Schrauben erforderlichen Relativzuordnung der beiden Gewindehälften.

Das Schwenkgelenk befindet sich an der einen Seite und die Klammer od. dgl. an der anderen Seitedes Muttergewindes. Es ist insbesondere vorgesehen, daß sich die Mitten des Bügelrückens, des Gewindes und der Klammer gemeinsam in einer Längsmittelebene des Schraubglieds befinden.

Unter "Gebrauchslage" wird die gegenseitige Zuordnung der beiden Gewindeteile verstanden, die ein Verschrauben des Muttergewindes mit einem Bolzengewinde ermöglichen. Mit Hilfe des Dorns wird der Bügel federelastisch aufgespreizt und, sobald diese Aufspreizkraft entfällt, federn die Bügelschenkel wieder zurück. Bei Anwesenheit eines Gewindebolzens führt dies zum Eingreifen der Muttergewindeteile in das Bolzengewinde.

Hierbei ist bevorzugt der Dorn an der Klammer od. dgl. angebracht, inbesondere angeformt (Anspruch 2). Dadurch übernimmt die Klammer zunächst die Aufgabe eines Halte- bzw. Betätigungsorgans für den Dorn.

Eine besonders bevorzugte Ausführungsform der Erfindung ist gemäß Anspruch 3 dadurch gekennzeichnet, daß sich der Dorn, insbesondere mittig, zwischen den beiden Klammerschenkeln befindet und sich in gleicher Richtung wie diese erstreckt, und daß der Dorn die Klammerschenkel mit einem verdickten Kopf überragt, der ein Aufspreizelement bildet. Wenn man den Kopf in die entsprechende Aufnahme einsteckt, so bewirkt er das Aufspreizen der beiden Bügelschenkel. Schiebt man die Klammer in gleiche Richtung noch stärker gegen das Schraubglied hin, so muß der Kopf dadurch in eine wirkungslose Stellung kommen und dafür nimmt dann die Klammer eine wirksame Stellung ein.

In dieser Richtung dient eine weitere Verbesserung der Erfindung, die sich aus Anspruch 4 ergibt. Der Kopf des Dorns übernimmt dabei nicht nur die Aufgabe des Aufspreizens, vielmehr bildet er in der wirksamen Lage des Bügels auch ein Halteelement, welches sich dem Abziehen des Bügels widersetzt. Dies schließt jedoch nicht aus, daß man durch entsprechendes Einwirken auch die Klammer, gegebenenfalls ohne Zuhilfenahme eines Hilfswerks, ohne sie zu zerstören, doch wieder abnehmen kann. Es ist deshalb sehr vorteilhaft, wenn man zumindest die Klammer mit dem Dorn, zweckmäßigerweise aber auch das Schraubglied, aus Kunststoff mit den für das Anbringen, Festhalten aber auch dem Verwendungszweck notwendigen Eigenschaften verwendet. Beispielsweise im Sanitärbereich wird besonders die Korrosionsbeständigkeit von Kunststoff sehr geschätzt.

Eine weitere Variante der Erfindung ergibt sich aus Anspruch 5. Die kreisförmige Scheibe kann zugleich als Handhabe für die Befestigung des Schraubglieds herangezogen werden. Außerdem kann man sie als Abdeckelement verwenden.

Die Erfindung wird nachstehend anhand der Zeichnung näher erläutert.

Die Zeichnung zeigt ein Ausführungsbeispiel der Erfindung.

Hierbei stellen dar:
- Fig. 1: eine Seitenansicht des Schraubglieds,
- Fig. 2: einen Schnitt gemäß der Linie II-II der Fig. 1,
- Fig. 3: eine Draufsicht auf Fig. 2,
- Fig. 4: Eine Seitenansicht der Klammer mit Aufdorn-Element,
- Fig. 5: Eine Ansicht der Fig. 4 in Pfeilrichtung A.

Das Schraubglied 1 besteht im wesentlichen aus einem etwa quaderförmigen Grundkörper 2 und einer an dessen in der Zeichnung oberem Ende angebrachten, vorzugsweise kreisrunden Scheibe 3. Im Gebrauch ist das Schraubglied 1 fest mit einer Klammer 4 verbunden. Der quaderförmige Grundkörper 2 ist, insbesondere mittig, längsgeschlitzt, wobei dieser Schlitz in Fig. 3 nach rechts hin randoffen ist. Dadurch entsteht am linken Ende ein Schwenkgelenk 5. Die beidseits des Schlitzes 6 gelegenen Hälften des Grundkörpers 2 bilden Bügelschenkel 7 und 8. Jeder trägt ein Muttergewindeteil 9 bzw. 10, wobei es sich beim Ausführungsbeispiel etwa um Muttergewindehälften handelt. Sie sind einander so zuordnenbar, daß sie zusammen ein Muttergewinde mit durchgehenden Gewindegängen bilden. Diese sind allerdings beim Ausführungsbeispiel durch den Schlitz 6 voneinander getrennt.

Die beiden Klammerschenkel 11 und 12 der etwa U-förmigen Klammer 4 umfassen in der Gebrauchslage den unteren Bereich 13 des Grundkörpers 2. Man kann die Breite des letzteren und den Seitenabstand der Klammerschenkel so wählen, daß letztere eine gewisse Presskraft ausüben, welche die Bügelschenkel in ihrer Arbeitsstellung festhält.

Beim Ausführungsbeispiel entsteht das Schwenkgelenk dadurch, daß der Grundkörper 2 an seinem in Fig. 3 linken Ende mit einer Bohrung 14 versehen ist. Diese hat von dem dazu parallelen Muttergewinde 15 etwa denselben Seitenabstand wie eine auf der anderen Seite angebrachte weitere Bohrung 16.

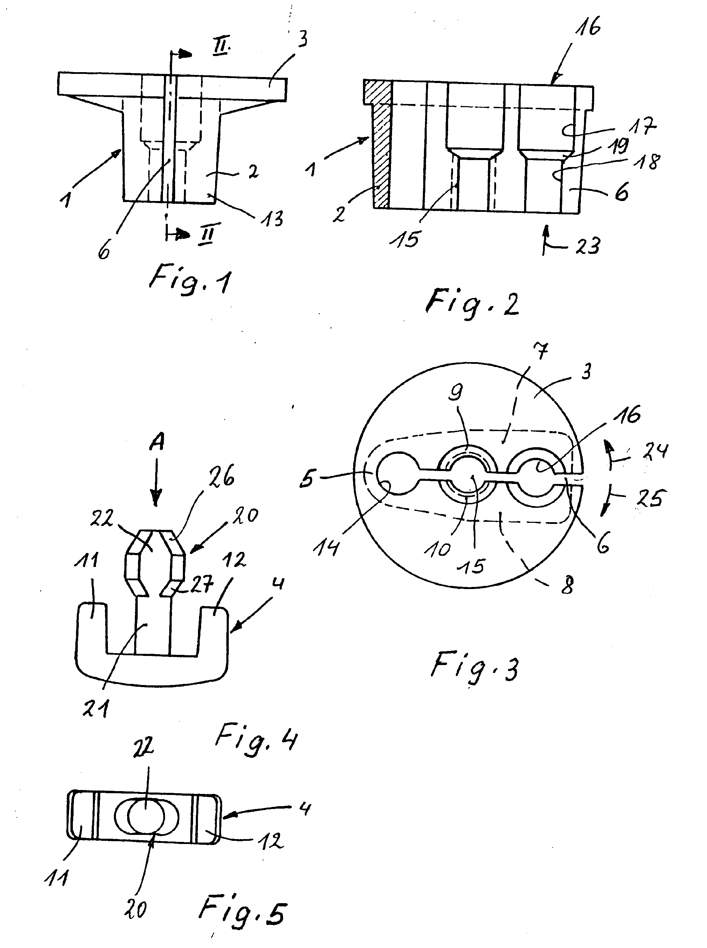

Die Bohrung 16 ist absatzartig erweitert, wobei der im Durchmesser größere Teil 17 der Scheibe 3 zugeordnet ist. Aus Fig. 2 ersieht man, daß sich das Muttergewinde 15 beim Ausführungsbeispiel nur über etwa die untere Hälfte des quaderförmigen Grundkörpers 2 erstreckt. Der obere Teil besitzt einen das Gewinde übertreffenden Durchmesser. Der Übergang vom im Durchmesser größeren Teil 17 zum kleineren Teil 18 erfolgt aus nachstehend näher erläuterten Gründen nicht in einem scharfen Absatz sondern über einen Konus 19. Die geometrischen Achsen der Bohrungen 14 und 16 sowie des Gewindes 15 liegen auf einer gemeinsamen Längsmittelebene.

Die Klammer 4 ist vorzugsweise einstückig mit einem Dorn 20 gefertigt. Sie besteht beim Ausführungsbeispiel aus einem Schaft 21 und einem verdickten Kopf 22. Der Durchmesser des letzteren entspricht etwa demjenigen des im Durchmesser kleineren Teils 18 der Bohrung 16. Die Klammer 4 wird im Sinne des Pfeils 23 auf den Grundkörper 2 aufgesteckt. Dabei tritt zunächst der verdickte Kopf 22 in den im Durchmesser kleineren Teil 18 in der Bohrung 16 ein. Dies führt zu einem Aufspreizen der Bügelschenkel 7 und 8 im Sinne der Pfeile 24 und 25. Die beiden Gewindeteile entfernen sich dabei ebenfalls voneinander und zwar soweit, daß das Schraubglied ohne Behinderung durch das Muttergewinde 15 entlang einem Bolzengewinde verschoben werden kann. Wenn man anschließend die Klammer 4 noch stärker im Sinne des Pfeils 23 gegen den Grundkörper 2 hin verschiebt, so gelangt einerseits der verdickte Kopf 22 in den im Durchmesser größeren Teil 17 der Bohrung 16, was ein Zurückfedern bewirkt, und andererseits umgreifen die beiden Klammerschenkel 11 und 12 den Grundkörper 2 bzw. die Bügelschenkel 7 und 8 an ihrem von Schwenkgelenk 5 am weitesten entfernten Bereich.

Das freie Ende des verdickten Kopfes 22 ist mit Schrägen 26 versehen, die im Sinne von Auflaufschrägen wirken und das Einstecken erleichtern. Am gegenüberliegenden bzw. dem Schaft 21 zugeordneten Ende befinden sich Gegenschrägen 27. Diese legen sich bei völlig aufgeschobener Klammer 4 an den Konus 19 der Bohrung 16 an. Man erreicht dadurch eine axiale Verspannung der Klammer 4 am Grundkörper 2. Dieses Schraubglied mit Muttergewinde zeichnet sich ganz besonders durch eine hohe Vibrationsfestigkeit aus.

## Patentansprüche

1. Schraubglied mit in Längsrichtung zweigeteiltem Muttergewinde (15), dessen beiden Gewindeteile (9, 10) mittels eines durch einen federelastisch aufspreizbaren Bügel gebildeten Schwenkgelenks (5) zumindest annähernd in Gebrauchslage gehalten oder bringbar sind, wobei die die Gewindeteile aufweisenden oder tragenden Bügelschenkel (7, 8) mittels einer Klammer (4) od. dgl. in Gebrauchslage gehalten sind und die Gewindeteile (9, 10) in der wirksamen Stellung der Klammer (4) das mit einem Bolzengewinde verschraubbare Muttergewinde (15) bilden, dadurch gekennzeichnet, daß sich das Schwenkgelenk (5) an der einen Seite und die Klammer od. dgl. an der anderen Seite des Muttergewindes (15) befinden, daß die Klammer (4) od. dgl. abnehmbar ist, und daß die beiden Gewindeteile (9, 10) bei abgenommener Klammer (4) etwa ihre Gebrauchslage einnehmen, wobei die beiden Bügelschenkel (7, 8) mittels eines parallel zur Gewindeachse einsteckbaren Dorns (20) aufspreizbar sind, der in eine seinem wirksamen Querschnitt angepaßte, vorzugsweise je zur Halte an den beiden Bügelschenkeln (7, 8) vorgesehene Aufnahme (16) einsteckbar ist.

2. Schraubglied nach Anspruch 1, dadurch gekennzeichnet, daß der Dorn (20) an der Klammer (4) od. dgl. angebracht, insbesondere angeformt, ist.

3. Schraubglied nach Anspruch 2, dadurch gekennzeichnet, daß sich der Dorn (20), insbesondere mittig, zwischen den beiden Klammerschenkeln (11, 12) befindet und sich in gleicher Richtung wie diese erstreckt, und daß der Dorn (20) die Klammerschenkel (11, 12) mit einem verdickten Kopf (22) überragt, der ein Aufspreizelement bildet.

4. Schraubglied nach Anspruch 3, dadurch gekennzeichnet, daß die Aufnahme für den Dorn (20) durch eine sich absatzartig erweiternde, längsgeschlitzte Bohrung (16) gebildet ist, die sich je zur Hälte in den beiden Bügelschenkeln (7, 8) des Schraubglieds (1) befinden, wobei der größere Durchmesser (17) etwa dem Kopfdurchmesser bzw. dem größten Maß des Kopfquerschnitts entspricht, während der kleinere Durchmesser (18) etwa dem Schaftquerschnitt (21) des Dorns (20) entspricht.

5. Schraubglied nach wenigstens einem der vorhergehenden Ansprüche, gekennzeichnet durch einen etwa quaderförmigen, nach einer Seite hin randoffenen, längsgeschlitzten Grundkörper (2), der an seinem einen Ende eine, vorzugsweise angeformte, insbesondere kreisrunde, Scheibe (3) trägt.

## Claims

1. A screw member with, divided into two in the longitudinal direction, a female screw thread (15) of which the two threaded parts (9, 10) are held in or can be brought to at least a position of use by means of a pivot joint (5) formed by a curved member which is adapted to be opened out in an elastically resilient manner, the arms (7, 8) comprising or carrying the screw threaded parts being held in the position of use by a clamp (4) or the like, the screw threaded parts (9, 10), when the clamp (4) is in its effective position, forming the female screw thread (5) which is adapted to be screwed together with a screw thread on a bolt member, characterised in that the pivot joint (5) is disposed on one side and the clamp or the like is disposed on the other side of the female screw thread (5) and in that the clamp (4) or the like is removable and in that both screw threaded parts (9, 10) substantially assume their position of use when the clamp (4) is removed, the two arms (7, 8) of the curved member being capable of being opened apart by means of a mandrel (20) which can be inserted parallel with the screw thread axis and into a housing (16) adapted in its effective cross-section and preferably provided half on each of the two arms (7, 8) of the curved member.

2. A screw member according to claim 1, characterised in that the mandrel (20) is fitted and is in particular integrally formed on the clamp (4) or the like.

3. A screw member according to claim 2, characterised in that the mandrel (20) is disposed in particular centrally between and extends in the same direction as the two clamp arms (11, 12) and in that the mandrel (20) has a thickened head (22) which forms an opening-out element and which projects beyond the clamp arms (11, 12).

4. A screw member according to claim 3, characterised in that the housing for the mandrel (20) is formed by a longitudinally slotted bore (16) which widens out in stepped fashion and which is disposed half in each of the two arms (7, 8) of the curved member in the screw member (1), the greater diameter (17) corresponding substantially to the head diameter or the greatest dimensions of the head cross-section, while the smaller diameter (18) corresponds substantially to the cross-section of the shank (21) of the mandrel (20).

5. A screw member according to at least one of the preceding claims, characterised by a substantially block-shaped longitudinally slotted basic body (2) with an open edge on one side and which carries at one end a preferably integrally formed and in particular circular disc (3).

## Revendications

1. Organe de vissage comprenant un filetage femelle (15) qui est divisé en deux parties dans la direction longitudinale et dont les deux parties (9, 10) du filetage sont maintenues en position d'utilisation ou peuvent y être amenées, du moins approximativement, au moyen d'une articulation en pivotement (5) constituée par un étrier à écartement élastique, cependant que les ailes (7, 8) de l'étrier qui comportent les parties du filetage ou qui les portent sont maintenues en position d'utilisation au moyen d'une pince (4) ou similaire, et que les parties (9, 10) du filetage constituent, dans la position active de la pince (4), le filetage femelle (15) dans lequel peut être vissé un goujon fileté, caractérisé par le fait que l'articulation en pivotement (5) se trouve sur l'un des côtés du filetage femelle (15), et que la pince ou similaire se trouve sur son autre côté, par le fait que la pince (4) ou similaire peut être retirée, et par le fait que les deux parties (9, 10) du filetage prennent à peu près leur position d'utilisation lorsque la pince (4) est retirée, cependant que les deux ailes (7, 8) de l'étrier peuvent être écartées au moyen d'un mandrin (20) qui peut être enfoncé parallèlement à l'axe du filetage et qui peut être enfoncé dans un évidement (16), lequel est adapté à sa section transversale efficace et prévu de préférence à chaque fois pour être maintenu sur les deux ailes (7, 8) de l'étrier.

2. Organe de vissage selon la revendication 1, caractérisé par le fait que le mandrin (20) est monté sur la pince (4) ou similaire, et qu'il est en particulier formé sur elle.

3. Organe de vissage selon la revendication 2, caractérisé par le fait que le mandrin (20) se trouve entre les deux ailes (11, 12) de la pince, et en particulier au milieu de celles-ci, en s'étendant dans la même direction qu'elles, et par le fait que le mandrin (20) fait saillie au-delà des ailes (11, 12) de la pince par une tête élargie (22) qui constitue un élément d'écartement.

4. Organe de vissage selon la revendication 3, caractérisé par le fait que l'évidement destiné au mandrin (20) est constitué par un percage (16) qui est fendu dans le sens longitudinal, qui s'élargit à la manière d'un épaulement et qui, en vue de leur maintien, se trouve à chaque fois dans les deux ailes (7, 8) de l'étrier de l'organe de vissage (1), le plus grand diamètre (17) correspondant à peu près au diamètre de la tête, ou, respectivement, à la plus grande dimension de la section transversale de la tête, tandis que le plus petit diamètre (18) correspond à peu près à la section transversale de la tige (21) du mandrin (20).

5. Organe de vissage selon l'une au moins des revendications précédentes, caractérisé par un corps de base (2) à peu près parallélépipédique qui est ouvert sur son bord vers l'un de ses côtés, qui est fendu dans le sens longitudinal et qui porte à l'une de ses extrémités un disque (3), en particulier circulaire, et de préférence formé sur lui.
